(19) Europäisches Patentamt
European Patent Office
Office européen des brevets

(11) **EP 4 242 543 A1**

(12) **EUROPEAN PATENT APPLICATION**
published in accordance with Art. 153(4) EPC

(43) Date of publication:
**13.09.2023 Bulletin 2023/37**

(21) Application number: **22790715.1**

(22) Date of filing: **28.02.2022**

(51) International Patent Classification (IPC):
**F24F 11/86** (2018.01)    **F24F 11/64** (2018.01)
**F24F 11/61** (2018.01)    **F24F 140/20** (2018.01)
**F24F 110/10** (2018.01)

(52) Cooperative Patent Classification (CPC):
Y02B 30/70

(86) International application number:
**PCT/CN2022/078348**

(87) International publication number:
**WO 2022/222605 (27.10.2022 Gazette 2022/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.04.2021 CN 202110436940**

(71) Applicants:
• **Qingdao Haier Air Conditioner General Corp., Ltd.**
  **Qingdao, Shandong 266101 (CN)**
• **Qingdao Haier Air-Conditioning Electronic Co., Ltd**
  **Qingdao, Shandong 266101 (CN)**
• **Haier Smart Home Co., Ltd.**
  **Qingdao, Shandong 266101 (CN)**

(72) Inventors:
• **ZHANG, Lilong**
  **Qingdao, Shandong 266101 (CN)**
• **WANG, Wanli**
  **Qingdao, Shandong 266101 (CN)**
• **YANG, Yuanxi**
  **Qingdao, Shandong 266101 (CN)**
• **LIAN, Jianchun**
  **Qingdao, Shandong 266101 (CN)**
• **LI, Jingsheng**
  **Qingdao, Shandong 266101 (CN)**
• **YANG, Wenjun**
  **Qingdao, Shandong 266101 (CN)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **CONTROL METHOD AND APPARATUS FOR AIR CONDITIONER COMPRESSOR, AND AIR CONDITIONER**

(57) A control method for an air conditioner compressor, comprising: obtaining a first correction temperature according to a first actual temperature reduction correction of an inner coil; when the first correction temperature is greater than a first preset temperature, controlling a compressor to operate at a reduced frequency according to a first frequency reduction rate; obtaining a second correction temperature according to a second actual temperature reduction correction of the inner coil; acquiring a second temperature difference; and when the second temperature difference is less than or equal to a first set temperature difference, controlling the compressor to operate at a reduced frequency according to a second frequency reduction rate. Also provided are a control apparatus for an air conditioner compressor, and an air conditioner. In a frequency-reduced operation stage of a compressor, a temperature rise amount within a set measurement interval duration is used as a switching parameter of a fast frequency reduction and a slow frequency reduction, so as to reduce a degree of lagging between a temperature of an inner coil and a frequency increase of the compressor, thereby avoiding the occurrence of a crash caused by frequency of the compressor being reduced too fast, and reduction correction can be performed on the actual temperature of the inner coil, thereby improving the stability of the compressor.

EP 4 242 543 A1

obtaining a first actual temperature of the inner coil ⟋S110

↓

according to the first actual temperature and a predetermined decreasing amplitude correction value, obtaining a first correction temperature ⟋S120

↓

in a case where the first correction temperature is greater than a first predetermined temperature, controlling the compressor to operate at a first frequency decreasing rate ⟋S130

↓

obtaining a second actual temperature of the inner coil ⟋S140

↓

according to the second actual temperature and the predetermined decreasing amplitude correction value, obtaining a second correction temperature ⟋S150

↓

obtaining a second temperature difference between the second correction temperature and the previous second correction temperature ⟋S160

↓

in a case where the second temperature difference is lower than or equal to a first setting temperature difference, controlling the compressor to operate at a second frequency decreasing rate; wherein the second frequency decreasing rate is lower than the first frequency decreasing rate ⟋S170

FIG. 1

**Description**

CROSS REFERENCE OF RELATED APPLICATION

This application claims priority to Chinese Patent Application No. CN202110436940.5, filed on April 22, 2021, the contents of which is incorporated herein by reference in its entirety.

FIELD OF THE INVENTION

The present disclosure relates to the intelligent air conditioner, for example, relates to a controlling method and a controlling device for a compressor of an air conditioner and an air conditioner.

BACKGROUND OF THE INVENTION

At present, in the heating operation of air conditioners, for example, normal heating mode, high-temperature self-cleaning mode, defrosting to heating operation mode, etc., it is necessary to increase the compressor frequency to raise the outlet air temperature to the target temperature, for example, 56°C or higher in high-temperature self-cleaning mode. At present, the increasing frequency control of the compressor generally includes an increasing frequency operation stage, a constant frequency operation stage, and a decreasing frequency operation stage to ensure that the compressor frequency is matched with the load of the refrigeration cycle system.

In actual operation, since the temperature change of the coil lags behind the frequency change of the compressor, for example, when the temperature of the coil exceeds 60°C, controlling the compressor begin to operate at a decreasing frequency operation. However, due to the lagged temperature change, even if the frequency of the compressor has already decreased to other operating temperature ranges, for example, a slow decreasing frequency temperature range or a constant frequency temperature range etc., the temperature of the coil lags will still feedback a high temperature instruction, so that controlling the compressor continue to operate at a fast decreasing frequency operation.

In the practice of the embodiment of the present disclosure, it is found that at least the following problems of the related technology: in the decreasing frequency operation stage of controlling compressor, the temperature change of the coil lags behind the decreased frequency of the compressor, which easily leads to the compressor frequency decreasing too fast, resulting in a shutdown.

SUMMARY OF THE INVENTION

In order to have a basic understanding of some aspects of the disclosed embodiments a brief summary is given below. The summary is not intended to be a general comment or to identify crucial/essential constituent elements or to describe the protection scope of these embodiments but rather to serve as a preface to the detailed description that follows.

The embodiment of the present disclosure provides a controlling method and a controlling device for a compressor of an air conditioner and an air conditioner, in order to solve problems that: in the decreasing frequency operation stage of controlling compressor, the temperature change of the coil lags behind the decreased frequency of the compressor, which easily leads to the compressor frequency decreasing too fast, resulting in a shutdown.

In some embodiments, the controlling method for a compressor of an air conditioner includes:
obtaining a first actual temperature of an inner coil; according to the first actual temperature and a predetermined decreasing amplitude correction value, obtaining a first correction temperature; in a case where the first correction temperature is greater than a first predetermined temperature, controlling the compressor to operate at a first frequency decreasing rate, the first predetermined temperature is greater than a upper limiting temperature of a constant frequency temperature range of the compressor; obtaining a second actual temperature of the inner coil; according to the second actual temperature and the predetermined decreasing amplitude correction value, obtaining a second correction temperature; obtaining a second temperature difference between the second correction temperature and the previous second correction temperature; in a case where the second temperature difference is lower than or equal to a first setting temperature difference, controlling the compressor to operate at a second frequency decreasing rate; wherein the second frequency decreasing rate is lower than the first frequency decreasing rate.

In some embodiments, the controlling device includes a processor and a memory storing program instructions, wherein the processor is configured to execute the mentioned controlling method for a compressor of an air conditioner in a case where executing the program instructions.

In some embodiments, the air conditioner includes the mentioned controlling device for a compressor of an air conditioner.

The controlling method and the controlling device for the compressor of the air conditioner, and the air conditioner provided by the embodiment of the disclosure can have the following technical advantages:

In the embodiment of the present disclosure, in the decreasing frequency operation stage of controlling compressor, the temperature increased amount within the setting detection interval duration is provided (for example, the second temperature difference), the lag degree of the temperature (the actual temperature or the correction temperature) of the inner coil is considered, and a nodal temperature (the first predetermined temperature) is set in the decreasing frequency temperature range. In a case where the correction temperature of the inner coil is greater than the nodal temperature, controlling the compressor to operate at a first frequency decreasing rate to decrease the frequency fast. In a case where the correction temperature of the inner coil is greater than the nodal temperature and the second temperature different is lower than or equal to a first setting temperature difference, it shows that the temperature increasing rate of the inner coil decreases and the lag degree of the temperature of the inner coil decreases. At this time, decreasing the frequency decreasing rate of the compressor to the second frequency decreasing rate, and entering the slow decreasing frequency operation. That is, in the decreasing frequency operation, increased temperature amount within the setting detection interval duration is taken as a switching parameter between the fast decreasing frequency operation and the slow decreasing frequency operation, which reduces the hysteresis degree between the inner coil temperature change and the compressor frequency increasing, avoids the phenomenon of the compressor shutdown caused by the compressor frequency decreasing too fast. On the basis, the actual temperature of the inner coil can be corrected by decreasing amplitude, and the correction temperature is defined as the temperature parameter to control the operation of the compressor, which can avoid the compressor from frequently entering the frequency cycle of increasing-constant-decreasing, improve the stability of the compressor, avoid the fluctuation of the air outlet temperature of the air conditioner caused by the frequent fluctuation of the compressor frequency, ensure the stability of ambient temperature and improve the user experience.

The above general description and the description below are exemplary and explanatory only and are not intended to limit the present disclosure.

## BRIEF DESCRIPTION OF THE DRAWINGS

One or more embodiments are illustrated by means of the corresponding drawings, which do not constitute a limitation of the embodiments, elements having the same reference numerals in the drawings are shown as similar elements, and the drawings do not constitute a limitation of proportion, wherein:

Fig. 1 is a flow chart of a controlling method for a compressor of an air conditioner provided by an embodiment of the present disclosure;
Fig. 2 is a flow chart of the controlling method for the compressor of the air conditioner provided by the other embodiment of the present disclosure;
Fig. 3 is a flow chart of the controlling method for the compressor of the air conditioner provided by the other embodiment of the present disclosure;
Fig. 4 is a flow chart of the controlling method for the compressor of the air conditioner provided by the other embodiment of the present disclosure;
Fig. 5 is a flow chart of the controlling method for the compressor of the air conditioner provided by the other embodiment of the present disclosure;
Fig. 6 is a schematic diagram of a controlling device for a compressor of an air conditioner provided by an embodiment of the present disclosure.

## DETAILED DESCRIPTION OF THE EMBODIMENTS

In order to enable a more detailed understanding of the features and technical content of the embodiments of the present disclosure, the implementation of the embodiments of the present disclosure will be described in detail below in conjunction with the accompanying drawings, which are for illustration only and are not intended to limit the embodiments of the present disclosure. In the following technical description for convenience of explanation, several details are provided for a full understanding of the disclosed embodiments. However, one or more embodiments may still be practiced without these details. In other instances, the well-known structures and devices may simplify the disclosure in order to simplify the drawings.

The terms "first", "second" and the like in the specification and claims of embodiments of the present disclosure and the above drawings are used to distinguish similar elements and are not necessarily used to describe a particular order or priority. It should be understood that the data used in this way can be interchanged where appropriate for the embodiments of the present disclosure described herein. Furthermore, the terms "include" and "have" and any variations thereof are intended to cover a non-exclusive inclusion.

Unless otherwise illustrated, the term "a plurality of" means two or more.

In the embodiment of the present disclosure, the character "/" indicates that the front element and rear element are in an "or" relationship. For example, A/B illustrates A or B.

The term "and/or" is an association relationship that describes elements, indicating that there can be three relationships. For example, A and/or B represent relationships: A or B, or A and B.

It should be noted that the embodiments of the present disclosure and the features in the embodiments can be combined with each other without conflict.

When the air conditioner system is in heating operation, for example, normal heating mode, high-temperature self-cleaning mode (such as 56°C high temperature self-cleaning), defrosting to heating operation mode, etc., the operation of the compressor generally includes the increasing frequency operation stage, the constant frequency operation stage and the decreasing frequency operation stage to control the outlet air temperature to reach the target temperature. And each operation stage corresponds to its operating temperature range. By real-time detecting the relationship between the temperature of the inner coil and the operating temperature range, the compressor can be controlled to operate at increasing frequency, constant frequency, or decreasing frequency. The increasing frequency operation corresponds to an increasing frequency temperature range, for example, the increasing frequency temperature range is lower than a first temperature. The constant frequency operation corresponds to a constant frequency temperature range, for example, the constant frequency temperature range is greater than or equal to the first temperature and lower than a second temperature. The decreasing frequency operation corresponds to a decreasing frequency temperature range, for example, the decreasing frequency temperature range is greater than or equal to the second temperature and lower than or equal to a third temperature. In a case where the temperature of the inner coil is greater than the third temperature, the compressor is controlled to stop, and the third temperature can be defined as the shutdown protection temperature. The first temperature, the second temperature, and the third temperature can be determined according to the available practical scenarios. For example, the first temperature is 50°C to 53°C, the second temperature is generally 4°C to 7°C greater than the first temperature, and the third temperature is generally 5°C to 8°C greater than the second temperature. For example, the first temperature is 52°C, the second temperature is 57°C, and the third temperature is 63°C. In addition, in a case where the temperature of the inner coil is greater than the third temperature, the compressor is controlled to stop. Of course, the above temperature value range is only a reference, and the above the increasing frequency temperature range, the constant frequency temperature range, the decreasing frequency temperature range and the shutdown protection temperature are not limited in the embodiment of the present disclosure.

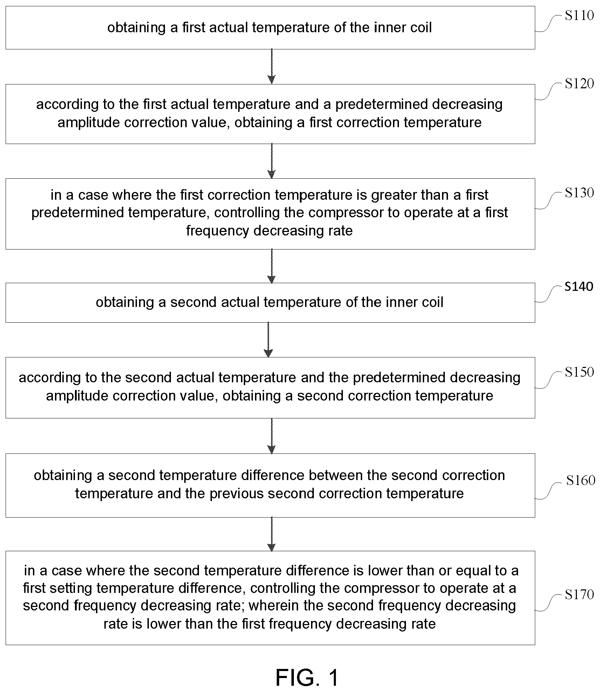

With reference to Fig. 1, the controlling method for the compressor of the air conditioner provided by the embodiment of the present disclosure, including:

S110, obtaining a first actual temperature of the inner coil.

The first actual temperature of the inner coil can be detected by a temperature sensor disposed in the middle of the inner coil.

Optionally, the controlling method of the embodiment of the present disclosure is to optimize the control of the decreasing frequency operation stage of the compressor, before proceeding to the step S110, a step of determining the compressor is in the constant frequency operation state can be included further. That is, when the compressor is in the constant frequency operation stage, and then obtaining the first actual temperature of the inner coil. In the embodiment, by detecting the operating frequency of the compressor and the detected operating frequency is a constant value, determining the compressor is in the constant frequency operation state; Or, by detecting the temperature of the inner coil, when the temperature of the inner coil is in the constant frequency temperature range, determining the compressor is in the constant frequency operation state.

S120, according to the first actual temperature and a predetermined decreasing amplitude correction value, obtaining a first correction temperature.

In step S120, the predetermined decreasing amplitude correction value is a definite value. The predetermined decreasing amplitude correction value is provided to correct the decrease of the first actual temperature. That is, the predetermined decreasing amplitude correction value subtracted from the first actual temperature is the first correction temperature, so that the first correction temperature is lower than the first actual temperature, in which the compressor can be prevented from entering the decreasing frequency temperature range prematurely by determining according to the first actual temperature of the inner coil, from frequently entering the frequency cycle of decreasing-increasing, and from reducing the stability of the air conditioner, further from affecting the user experience.

Optionally, the predetermined decreasing amplitude correction value is 3°C to 7°C. Optionally, the predetermined decreasing amplitude correction values can be 3°C, 4°C, 5°C, 6°C and 7°C or any other value.

S130, in a case where the first correction temperature is greater than a first predetermined temperature, controlling the compressor to operate at a first frequency decreasing rate.

The first predetermined temperature is greater than the upper limiting temperature of the constant frequency temperature range of the compressor, that is, the first predetermined temperature is in the decreasing frequency temperature range, and can be determined according to the available practical scenarios. Optionally, the first predetermined temperature is 59 °C to 61°C. Optionally, the first predetermined temperature is 60°C.

Optionally, the first frequency decreasing rate is 0.01 Hz/s to 1.5 Hz/s. Optionally, the first frequency decreasing rate is 0.05 Hz/s to 1.4 Hz/s. Optionally, the first frequency decreasing rate is 0.08 Hz/s to 1.2 Hz/s. Optionally, the first frequency decreasing rate is 0.1 Hz/s to 1 Hz/s.

S140, obtaining a second actual temperature of the inner coil.

The second actual temperature of the inner coil can be detected by a temperature sensor disposed in the middle of the inner coil.

S150, according to the second actual temperature and the predetermined decreasing amplitude correction value, obtaining a second correction temperature.

Herein, the predetermined decreasing amplitude correction value is the same as the predetermined decreasing amplitude correction value in step S120, and will not be described here.

S160, obtaining a second temperature difference between the second correction temperature and the previous second correction temperature.

In step S160, since the second correction temperature is obtained by correcting the second actual temperature of the inner coil by the decreasing amplitude of the predetermined value, the second temperature difference is also the difference between the second actual temperature and the previous second actual temperature. In the embodiment, the second actual temperature of the inner coil is detected by a setting detection interval duration, and the detection interval duration is not limited. Optionally, the detection interval duration is a setting value, for example, 40s, 30s, 20s, or 10s.

The second temperature difference is the difference between the second actual temperature at two adjacent detection moments, and the previous second actual temperature is the second actual temperature detected at the previous detection moment at which the detection moment in the adjacent two detection moments is preceded. Specifically, the second temperature difference is obtained by the previous second actual temperature subtracted from the current second actual temperature.

S170, in a case where the second temperature difference is lower than or equal to a first setting temperature difference, controlling the compressor to operate at a second frequency decreasing rate; wherein the second frequency decreasing rate is lower than the first frequency decreasing rate.

The first setting temperature difference is a predetermined value, which can be determined according to the available practical scenarios. Optionally, the first setting temperature difference is 0.4°C to 1.2°C. Optionally, the first setting temperature difference is 0.5°C. Of course, the first setting temperature difference can also be other values, such as 0.6°C, 0.8°C, 1°C, 1.1°C, and 1.2°C.

The second frequency decreasing rate is lower than the first frequency decreasing rate. Optionally, the first frequency decreasing rate is 0.8 Hz/s to 1.5 Hz/s. Optionally, the first frequency decreasing rate is 0.9 Hz/s to 1.2 Hz/s. Optionally, the first frequency decreasing rate is 1 Hz/s.

Optionally, the second frequency decreasing rate is 0.01 Hz/s to 0.5 Hz/s. Optionally, the second frequency decreasing rate is 0.05 Hz/s to 0.2 Hz/s. Optionally, the second frequency decreasing rate is 0.08 Hz/s to 0.15 Hz/s. Optionally, the second frequency decreasing rate is 0.1 Hz/s.

In the embodiment of the present disclosure, a temperature increased amount (for example, a second temperature difference) within a setting detection interval duration is provided in the decreasing frequency operation stage of the compressor, and the lag degree of the temperature (actual temperature or correction temperature) of the inner coil is considered. At the same time, a nodal temperature (first predetermined temperature) is provided in the decreasing frequency temperature range. In a case where the correction temperature of the inner coil is greater than the nodal temperature, controlling the compressor to operate at the first frequency decreasing rate; in a case where it is greater than the nodal temperature, and the second temperature difference is lower than or equal to the first setting temperature difference, which shows that a temperature increasing rate of the inner coil and the lag degree decrease, at this time, the frequency decreasing rate of the compressor is reduced to the second frequency decreasing rate, which is a slow decreasing frequency operation. That is, a temperature increased amount within a setting detection interval duration during the decreasing frequency operation is regarded as the switching parameter between the fast decreasing frequency operation and the slow decreasing frequency operation, which reduces the hysteresis between inner coil temperature and compressor increasing frequency, avoids the compressor frequency decreasing too fast and the phenomenon of compressor shutdown, and effectively solves the problem of too fast decreasing frequency of the compressor caused by the temperature change of the coil lagging behind the decreased frequency of the compressor. On the basis, the actual temperature of the inner coil can be corrected by decreasing amplitude, the correction temperature is defined as the temperature parameter to control the operation of the compressor, which can avoid the compressor from frequently entering the frequency cycle of increasing-constant-decreasing, improve the stability of the compressor, avoid the fluctuation of the air outlet temperature of the air conditioner caused by the frequent fluctuation of the compressor frequency, ensure the stability of ambient temperature and improve the user experience.

The controlling method of the embodiment of the present disclosure is adapted to the control of the compressor in the heating operation of the air conditioner system, for example, the normal heating mode, the high-temperature self-cleaning mode (e.g., the high-temperature self-cleaning at 56°C), the defrosting to the heating operation mode, etc. It can effectively reduce the shutdown frequency of the compressor in the heating operation stage, and even avoid the compressor crash.

In some embodiments, the controlling method further includes: obtaining an initial operating frequency of the compressor operating at a first frequency decreasing rate, and a first current operating frequency; obtaining a current frequency decreasing amplitude according to the initial operating frequency and the first current operating frequency; in a case where the current frequency decreasing amplitude is greater than a predetermined frequency decreasing amplitude and the compressor is in the frequency decreasing operation at a first frequency decreasing rate, controlling the compressor to operate at a second frequency decreasing rate. In the embodiment, the frequency decreasing amplitude parameter is provided in the fast decreasing frequency operation of the compressor, in a case where the frequency decreasing amplitude is greater than the predetermined frequency decreasing amplitude, directly exiting the fast decreasing frequency operation, and entering the slow decreasing frequency operation. The frequency decreasing amplitude is introduced, which can effectively avoid the compressor frequency decreasing too much and the frequency fluctuation of the compressor. Optionally, the predetermined frequency decreasing amplitude is 15Hz to 20Hz. Optionally, the predetermined frequency decreasing amplitude is 18Hz.

In the embodiment, the initial operating frequency of the compressor operating at a first frequency decreasing rate can be detected when controlling the compressor to operate at a first frequency decreasing rate. Or, When the compressor is in the constant frequency operation before entering the fast frequency decreasing operation, the initial temperature is the constant frequency of the constant frequency operation.

In some embodiments, the controlling method further includes: in a case where the first correction temperature is in the constant frequency temperature range, obtaining a first temperature difference between the first correction temperature and the previous first correction temperature; in a case where the first temperature difference is greater than or equal to a second setting temperature difference, controlling the compressor to operate at a first frequency decreasing rate. In the embodiment, the understanding of the first temperature difference is the same as the understanding of the second temperature difference in step S160, and will not be described here. During the compressor is in the constant frequency operation stage, the lag degree of the temperature of the inner coil is analyzed and judged by the first temperature difference obtained in real-time, in a case where the first temperature difference is greater than or equal to the second setting temperature difference, which shows that the constant frequency operation of the compressor has accumulated a lot of heat, and the lag degree is large, at this time, controlling the compressor to exit the constant frequency operation and enter the frequency decreasing operation. Herein, the second frequency decreasing rate is the same as the first frequency decreasing rate in step S130, and will not be described here.

Optionally, in a case where the first temperature difference is greater than or equal to the second setting temperature difference, controlling the compressor to operate at a first frequency decreasing rate, includes: in a case where the first correction temperature is greater than or equal to a second predetermined temperature and the first temperature difference is greater than or equal to a second setting temperature difference, controlling the compressor to operate at a first frequency decreasing rate; wherein the second predetermined temperature is greater than a lower limiting temperature of the constant frequency temperature range and lower than a upper limiting temperature of the constant frequency temperature range. Optionally, the second predetermined temperature is 54°C to 56°C. Optionally, the second predetermined temperature is 55°C.

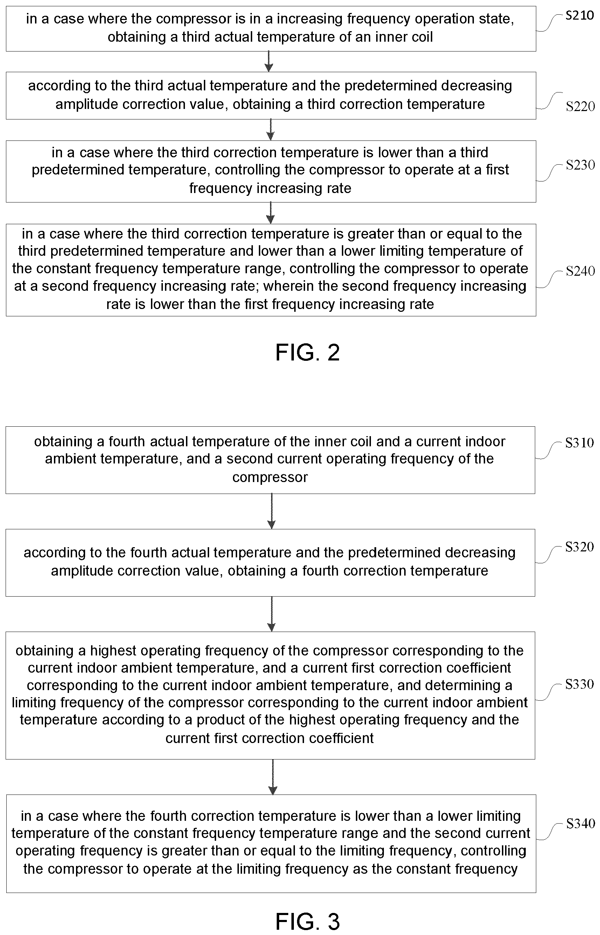

With reference to Fig. 2, the embodiment of the present disclosure provides the controlling method for a compressor of an air conditioner, adapting to an increasing frequency operation stage, includes the following steps:

S210, in a case where the compressor is in a increasing frequency operation state, obtaining a third actual temperature of an inner coil;

Herein, by detecting the changes in compressor frequency, it can be determined whether the compressor is in an increasing frequency operation state. Specifically, the frequency of the compressor increases with time, it is determined that the compressor is in the increasing frequency operation state. The third actual temperature can be detected by a temperature sensor disposed in the middle of the inner coil.

S220, according to the third actual temperature and the predetermined decreasing amplitude correction value, obtaining a third correction temperature.

Herein, the predetermined decreasing amplitude correction value is the same as the predetermined decreasing amplitude correction value in step S120, and will not be described here.

S230, in a case where the third correction temperature is lower than a third predetermined temperature, controlling the compressor to operate at a first frequency increasing rate;

S240, in a case where the third correction temperature is greater than or equal to the third predetermined temperature and lower than a lower limiting temperature of the constant frequency temperature range, controlling the compressor to operate at a second frequency increasing rate; wherein the second frequency increasing rate is lower than the first frequency increasing rate.

In the embodiment of the present disclosure, the increasing frequency operation is divided into a fast increasing frequency operation and a slow increasing frequency operation by setting the third predetermined temperature. The operating frequency of the compressor is controlled more precisely, the fluctuations of operating frequency of the compressor is reduced, the stability of the air conditioner outlet temperature can be ensured, thereby the indoor ambient temperature is stable, the user experience is improved.

The third predetermined temperature is a temperature node of the increasing frequency operation stage of the compressor, so the third predetermined temperature is lower than the lower limiting temperature of the constant frequency temperature range. Optionally, the third predetermined temperature is 45°C to 50°C. Optionally, the third predetermined temperature is 47°C.

In the embodiment of the present disclosure, the first frequency increasing rate is 0.05Hz/s to 1.5 Hz/s, the second frequency increasing rate is lower than the first frequency increasing rate. Optionally, the first frequency increasing rate is 0.08Hz/s to 1.2 Hz/s. Optionally, the first frequency increasing rate is 1Hz/s.

Optionally, the second frequency increasing rate is 0.01 Hz/s to 0.5 Hz/s. Optionally, the second frequency increasing rate is 0.05Hz/s to 0.2 Hz/s. Optionally, the second frequency increasing rate is 0.08Hz/s to 0.15 Hz/s. Optionally, the second frequency increasing rate is 0.1 Hz/s.

Optionally, the controlling method further includes: obtaining a current increasing frequency operation duration of the compressor; in a case where the current increasing frequency operation duration is longer than or equal to a setting increasing frequency operation duration and the third correction temperature is lower than the third predetermined temperature, replacing the third correction temperature with a reference temperature, and executing the control of the compressor according to the reference temperature; the reference temperature is a constant value which is greater than the third predetermined temperature and lower than a lower limiting temperature of the constant frequency temperature range. In the embodiment, if the correction temperature of the inner coil is still lower than the third predetermined temperature after the setting increasing frequency operation duration, it indicates that the temperature of the inner coil lags seriously, therefore, exiting the fast increasing frequency operation, and entering the low increasing frequency operation, thereby ensuring the stability of the air conditioning outlet temperature and the stability of the indoor temperature, and ensuring the user experience.

Optionally, the lower limiting temperature of the constant frequency temperature range is 52°C, the third predetermined temperature is 47°C, the reference temperature is 48°C.

The setting increasing frequency operation duration can be determined according to the available practical scenarios. For example, the setting increasing frequency operation duration is 1min to 5min, specifically 1min, 2min, 3min, or 5min, etc.

Optionally, the controlling method further includes the following steps: S231, in a case where the third correction temperature is greater than or equal to a fifth predetermined temperature and lower than the third predetermined temperature, obtaining a third temperature difference between the third correction temperature and the previous third correction temperature.

The fifth predetermined temperature is lower than the third predetermined temperature. Optionally, the fifth predetermined temperature is 15°C to 20°C lower than the third predetermined temperature. Optionally, the fifth predetermined temperature is 17°C lower than the third predetermined temperature.

Optionally, the fifth predetermined temperature is 27°C to 37°C. Optionally, the fifth predetermined temperature is 27°C to 32°C. Optionally, the fifth predetermined temperature is 30°C.

The understanding of the third temperature difference is the same as the second temperature difference in step S160, and will not be described here.

S231, in a case where the third temperature difference is greater than or equal to a third setting temperature difference, controlling the compressor to operate at the second frequency increasing rate.

The third setting temperature difference is a predetermined value, it can be determined according to the available practical scenarios. Optionally, the third setting temperature difference is 0.4°C to 1.2°C. Optionally, the third setting temperature difference is 0.5°C. Of course, the third setting temperature difference can be other values, such as 0.6°C, 0.8°C, 1°C, 1.1°C, and 1.2°C.

In the embodiment, a temperature increased amount (for example, a third temperature difference) within a setting detection interval duration is provided in the fast increasing frequency operation stage of the compressor, and the lag degree of the temperature (actual temperature or correction temperature) of the inner coil is considered. At the same time, a nodal temperature (fifth predetermined temperature) is provided in the increasing frequency temperature range. In a case where it is lower than the nodal temperature, controlling the compressor to operate at the first frequency increasing rate; in a case where it is greater than the nodal temperature, and the third temperature difference is greater than or equal to the third setting temperature difference, which shows that the fast increasing frequency operation of the compressor has accumulated a lot of heat, and the lag degree is large, at this time, the frequency increasing rate of the compressor is reduced to the second frequency increasing rate, which is a slow increasing frequency operation. That is, during the increasing frequency operation, the temperature increased amount in the setting detection interval duration is taken as a switching parameter between the fast increasing frequency operation and the slow increasing frequency operation, which reduces the hysteresis between inner coil temperature and compressor increasing frequency, avoids the phenomenon of compressor shutdown caused by the compressor frequency increasing too fast, and effectively solves the problem of too high compressor frequency caused by the hysteresis of the temperature change of the inner coil.

In step S240 of the embodiment of the present disclosure, it can be understood that during the operation of the compressor at the second frequency increasing rate, the actual temperature of the inner coil and the correction temperature are continuously obtained and corrected by decreasing amplitude. In a case where the correction temperature meets the constant frequency operation condition, the increasing frequency operation is exited and the constant frequency operation is entered. The constant frequency operation condition is determined according to actual application scenarios.

In some embodiments, as shown in Fig. 3, after controlling the compressor to operate at the second frequency increasing rate, the controlling method further includes:

S310, obtaining a fourth actual temperature of the inner coil and a current indoor ambient temperature, and a second current operating frequency of the compressor.

The fourth actual temperature of the inner coil can be detected by a temperature sensor disposed in the middle of the inner coil, and the current indoor ambient temperature can be detected by a temperature sensor disposed indoors.

S320, according to the fourth actual temperature and the predetermined decreasing amplitude correction value, obtaining a fourth correction temperature.

Herein, the predetermined decreasing amplitude correction value is the same as the predetermined decreasing amplitude correction value in step S120, and will not be described here,

S330, obtaining a highest operating frequency of the compressor corresponding to the current indoor ambient temperature, and a current first correction coefficient corresponding to the current indoor ambient temperature, and determining a limiting frequency of the compressor corresponding to the current indoor ambient temperature according to a product of the highest operating frequency and the current first correction coefficient.

In step S330, from a predetermined first corresponding relationship of the indoor ambient temperature and the highest operating frequency of the compressor and a predetermined second corresponding relationship of the indoor ambient temperature and the first correction coefficient, respectively reading the highest operating frequency of the compressor and the current first correction coefficient corresponding to the current indoor ambient temperature.

The first corresponding relationship of the indoor ambient temperature and the highest operating frequency of the compressor can be obtained by detecting the highest frequency of amplifying frequency heating of the compressor under different indoor ambient temperatures, the highest frequency of amplifying frequency heating is the highest operating frequency of the compressor corresponding to the current indoor ambient temperature.

The higher the indoor ambient temperature, the lower the highest frequency of the compressor allowed by the air conditioner system, so the increasing space of the frequency of the compressor is small. Therefore, the first correction coefficient is configured to correct the decreasing amplitude of the highest operating frequency of the compressor, so as to avoid the fast increasing frequency of the compressor in the increasing frequency operation stage, prevent the frequency of the compressor from increasing to the highest operating frequency or even exceeding the highest operating frequency and avoid the compressor from the shutdown.

Optionally, obtaining a current first correction coefficient corresponding to the current indoor ambient temperature, includes: according to a negative correlation relationship between the indoor ambient temperature and the first correction coefficient, determining the current first correction coefficient corresponding to the current indoor ambient temperature; wherein, the first correction coefficient is in a range of greater than or equal to 0.4 and lower than 1. That is, the higher the indoor ambient temperature is, the smaller the first correction coefficient is, so that the limiting frequency of the compressor is smaller, which is determined according to the product of the highest operating frequency and the current first correction coefficient, so that the frequency increasing range of the compressor is reduced, thereby ensuring that the operating frequency of the compressor is within an allowable range and avoiding shutdown.

Optionally, the predetermined corresponding relationship between the indoor ambient temperature and the first correction coefficient, includes a plurality of continuous indoor ambient temperature sections, and each indoor ambient temperature section corresponds to one first correction coefficient. In the embodiment, the indoor ambient temperature range is divided to a plurality of indoor ambient temperature sections by setting nodal temperatures according to the conventional range of the indoor ambient temperature. There is no limit to the amount of indoor ambient temperature sections, which can be 2, 3, 4, or more.

Optionally, the amount of indoor ambient temperature sections is 3.

Optionally, the first indoor ambient temperature section is lower than 17°C. The second indoor temperature section is from greater than or equal to 17°C to lower than 30°C. The third indoor ambient temperature section is greater than or equal to 30°C.

Optionally, the variation of the first correction coefficient is a synchronous linear or an asynchronous fold line pattern with the variation of the indoor ambient temperature.

Optionally, the first indoor ambient temperature section is lower than 17°C, the first correction coefficient is 0.9. The second indoor temperature section is from greater than or equal to 17°C to lower than 30°C, the first correction coefficient is 0.8. The third indoor ambient temperature section is greater than or equal to 30°C, the first correction coefficient is 0.5. In the embodiment, the variation of the first correction coefficient is in an asynchronous fold line pattern with the variation of the indoor ambient temperature.

Optionally, obtaining the current first correction coefficient corresponding to the current indoor ambient temperature, includes: obtaining the current indoor ambient temperature and determining the temperature section where the current indoor environment is located; according to the corresponding relationship between the temperature section and the first correction system, determining the current first correction coefficient corresponding to the current indoor environment.

S340, in a case where the fourth correction temperature is lower than a lower limiting temperature of the constant frequency temperature range and the second current operating frequency is greater than or equal to the limiting frequency, controlling the compressor to operate at the limiting frequency as the constant frequency.

In step S340, when the fourth correction temperature is lower than the lower limiting temperature of the constant frequency temperature range, that is, it is within the increasing frequency temperature range, if the operating frequency of the compressor is increased to the limiting frequency, controlling the compressor to exit the increasing frequency operation and enter the constant frequency operation, so as to avoid the problem that the increasing frequency of the compressor is too high caused by the hysteresis of the temperature change of the inner coil and causes the compressor to the shutdown. The lower limiting temperature of the constant frequency temperature range (or, the upper limiting temperature of the increasing frequency temperature range) can be determined according to the available practical scenarios, such as the first temperature mentioned above. For example, 52°C.

In the process of realizing the embodiment of the present disclosure, it is found that under different indoor ambient temperatures, the temperature increasing rate of the inner coil is different, and thus the highest operating frequency in the increasing frequency operation stage of the compressor is different. And under different indoor ambient temperatures, the highest operating frequency of the compressor can reaches is also different. Therefore, the highest operating frequency of the compressor is corrected through introducing the indoor ambient temperature, and the corrected highest operating frequency is taken as the limiting frequency, and the limiting frequency is taken as operating frequency in the constant frequency operation stage, which effectively solves the problem of too high compressor frequency caused by the hysteresis of the temperature change of the inner coil. And while the frequency of the constant frequency operation is forcedly controlled to reduce, the actual temperature of inner coil can be corrected by decreasing amplitude, and the corrected temperature is taken as the temperature parameter to control the operation of the compressor, which can avoid the compressor from frequently entering the frequency cycle of increasing-constant-decreasing, improve the stability of the compressor, avoid the fluctuation of the air outlet temperature of the air conditioner caused by the frequent fluctuation of the compressor frequency, ensure the stability of ambient temperature and improve the user experience.

In step S330 of the embodiment of the present disclosure, the highest operating frequency of the compressor can be obtained by the following methods besides the predetermined first corresponding relationship, as shown in Fig. 2, obtaining the highest operating frequency of the compressor corresponding to the current indoor ambient temperature, includes:

S410, obtaining a current fourth temperature difference between the current fourth correction temperature and the previous fourth correction temperature and a detection interval duration after controlling the compressor to operate at a second frequency increasing rate for a setting duration.

The setting duration is not limited, for example, the setting duration is 10s, 15s and 20s etc. The understood of the current fourth temperature difference is the same as the second temperature difference in step S160, and will not be described here,

S420, according to the current fourth temperature difference and the detection interval duration, determining a predictive temperature increasing duration required by the fourth correction temperature increasing to the lower limiting temperature of the constant frequency temperature range.

Optionally, according to a ratio of the current fourth temperature difference and the detection interval duration, determining a current temperature increasing rate, and according to a ratio of the increased temperature of the current fourth correction temperature increasing to the lower limiting temperature of the constant frequency temperature range and the current temperature increasing rate, determining the predictive temperature increasing duration.

In the embodiment, the increased temperature is divided by the current temperature increasing rate to obtain the time required by the current temperature increasing to the lower limiting temperature of the constant frequency temperature range at the current temperature increasing rate, which is, the predictive temperature increasing duration. The predictive temperature increasing duration t is obtained by the following equation (1):

$$t = \Delta T / v \qquad\qquad (1)$$

where $\Delta T$ is the increased temperature, $v$ is the current temperature increasing rate; $v = \Delta T' / \Delta t$, where $\Delta T'$ is the current temperature difference, and $\Delta t$ is the detection interval duration.

Optionally, according to the current fourth temperature difference and the detection interval duration, determining a predictive temperature increasing duration required by the fourth correction temperature increasing to the lower limiting temperature of the constant frequency temperature range, includes: according to a ratio of the current temperature difference and the detection interval duration, determining a current temperature increasing rate; and according to a ratio of the increased temperature of the current fourth correction temperature increasing to the lower limiting temperature of the constant frequency temperature range and the current temperature increasing rate, determining an initial predictive temperature increasing duration; according to the detection interval duration and the initial predictive temperature increasing duration (the ratio of the initial predictive temperature increasing duration to the detection interval duration), obtaining a predictive detection times; obtaining a current second correction coefficient corresponding to the current indoor ambient temperature; and according to the detection interval duration, the second correction coefficient and the predictive detection times, determining the predictive temperature increasing duration. In the embodiment, the initial predictive temperature increasing duration is obtained based on the current temperature increasing rate. In the subsequent temperature increasing process, because of the influence of the hysteresis of the actual temperature of the inner coil and the frequency increasing rate of the compressor, the temperature increasing rate will show a certain increasing trend. Therefore, a second correction coefficient is provided to correct the detection interval duration, so as to obtain a more accurate predictive temperature increasing duration, and then the predictive highest operating power is more accurate.

The higher the indoor ambient temperature, the actual temperature of the inner coil increases rapidly at the later stage of the increasing frequency operation. That is, as the increasing frequency operation progresses, the temperature increasing duration required by the actual temperature of the inner coil to increase by the current temperature difference is shorter. Therefore, based on the detection interval duration required by the current temperature difference, the second correction coefficient is configured to correct the detection interval duration.

Optionally, the predictive temperature increasing duration t is obtained by the following equation (2):

$$t = \Delta t \cdot \left(1 + \sum_{i=1}^{n-1}(1 - \alpha)^i\right) \qquad (2)$$

where $\Delta t$ is the detection interval duration; $\alpha$ is the second correction coefficient, which is greater than 0 and lower than or equal to 0.1; n is the detection times, $n = [t°/\Delta t]$, where $t°$ is calculated by equation (1).

Optionally, obtaining a current second correction coefficient corresponding to the current indoor ambient temperature, includes: according to a positive correlation relationship between the indoor ambient temperature and the second correction coefficient, determining the current second correction coefficient corresponding to the current indoor ambient temperature; wherein, the second correction coefficient is in a range from greater than 0 to lower than or equal to 0.1. That is, the higher the indoor ambient temperature, the larger the second correction coefficient, so that the corrected temperature increasing duration (the time required by the actual temperature of the inner coil to increase by the increased temperature of the current temperature difference value) is shorter, and the obtained predictive temperature increasing duration is more accurate.

Optionally, the predetermined corresponding relationship between the indoor ambient temperature and the second correction coefficient includes a plurality of continuous indoor ambient temperature sections, and each indoor ambient temperature section corresponds to one second correction coefficient. In the embodiment, according to the conventional range of the indoor ambient temperature, the indoor ambient temperature range is divided to a plurality of indoor ambient temperature sections by setting nodal temperatures. There is no limit to the amount of indoor ambient temperature sections, which can be 2, 3, 4, or more.

Optionally, the amount of indoor ambient temperature sections is 3.

Optionally, the first indoor ambient temperature section is lower than 17°C; The second indoor temperature range is greater than or equal to 17°C and lower than 30°C; The third indoor ambient temperature range is greater than or equal to 30°C.

Optionally, the variation of the second correction coefficient is in a synchronous linear or an asynchronous fold line pattern with the variation of the indoor ambient temperature.

Optionally, the first indoor ambient temperature section is lower than 17°C, and the second correction coefficient is 0.01; The second indoor temperature section is greater than or equal to 17°C and lower than 30°C, and the second correction coefficient is 0.05; The third indoor ambient temperature section is greater than or equal to 30°C, and the second correction coefficient is 0.08. In the embodiment, the variation of the second correction coefficient changes in an asynchronous fold line pattern with the variation of the indoor ambient temperature.

S430, according to the predictive temperature increasing duration and the second frequency increasing rate of the compressor, determining the highest operating frequency of the compressor corresponding to the current indoor ambient temperature.

Optionally, obtaining a predictive increased frequency of the compressor, according to the product of the predictive temperature increasing duration and the second frequency increasing rate of the compressor. And adding the predictive increased frequency to the current operating frequency of the compressor is the predictive highest operating frequency of the compressor. The current operating frequency of the compressor may be obtained at the same time as the fourth correction value obtained in step S410.

In the embodiment, during the compressor is in the slow increasing frequency operation stage by the second frequency increasing rate, the highest operating frequency of the compressor is estimated by utilizing the fourth correction temperature obtained in real-time, the detection interval duration between the first actual temperature obtained in real-time and the actual temperature of the inner coil obtained in the previous detection, and the operating frequency of the compressor, so that the highest operating frequency of the compressor obtained is more accurate.

That is, in the current indoor environment, the highest operating frequency of the compressor can be obtained from the predetermined first corresponding relationship, or the highest operating frequency can be estimated by the real-time correction temperature change of the inner coil and the operating frequency of the compressor during the increasing frequency operation.

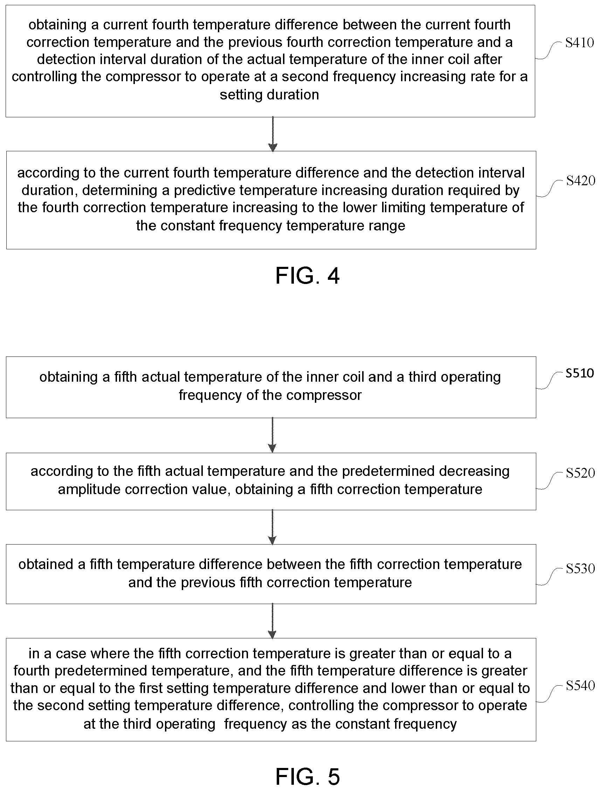

In other embodiments, as shown in Fig. 5, after the controlling the compressor to operate at a second frequency increasing rate, the controlling method further includes:

S510, obtaining a fifth actual temperature of the inner coil and a third operating frequency of the compressor.

The fifth actual temperature of the inner coil can be detected by a temperature sensor disposed in the middle of the inner coil, and the third operating frequency of the compressor can be obtained by the conventional method.

S520, according to the fifth actual temperature and the predetermined decreasing amplitude correction value, obtaining a fifth correction temperature.

Herein, the predetermined decreasing amplitude correction value is the same as the predetermined decreasing amplitude correction value in step S120, and will not be described here.

S530, obtained a fifth temperature difference between the fifth correction temperature and the previous fifth correction temperature.

In step S530, the understanding of the fifth temperature difference is the same as the second temperature difference in step S160, and will not be described here.

S540, in a case where the fifth correction temperature is greater than or equal to a fourth predetermined temperature, and the fifth temperature difference is greater than or equal to the first setting temperature difference and lower than or equal to the second setting temperature difference, controlling the compressor to operate at the third operating frequency as the constant frequency.

Herein, the fifth correction temperature is obtained in the slow increasing frequency operation stage of the compressor, and is higher than the third correction temperature, therefore, the fourth predetermined temperature is greater than the third predetermined temperature. Optionally, the fourth predetermined temperature is 2°C to 5°C greater than the third predetermined temperature. Optionally, the fourth predetermined temperature is 3°C greater than the third predetermined temperature. For example, the third predetermined temperature is 45°C to 50°C, the fourth predetermined temperature is 47°C to 55°C.

Optionally, the fourth predetermined temperature is 49°C to 52°C. Optionally, the fourth predetermined temperature is 50°C.

The first setting temperature difference is the same as the first setting temperature difference in step S150.

The first setting temperature difference and the second setting temperature difference are predetermined value, and can be determined according to the available practical scenarios. Optionally, the first setting temperature difference is 0.4°C to 1.2°C. Optionally, the first setting temperature difference is 0.5°C. Of course, the first setting temperature difference can also be other values, such as 0.6°C, 0.8°C, 1 °C, 1.1 °C, and 1.2°C.

The second setting temperature difference is greater than the first setting temperature difference. Optionally, the second setting temperature difference is 0.4°C to 0.8°C greater than the first setting temperature difference. Optionally, the second setting temperature difference is 0.4°C to 0.6°C greater than the first setting temperature difference. Optionally, the second setting temperature difference is 0.5°C greater than the first setting temperature difference.

Optionally, the first setting temperature difference is 0.4°C to 1.2°C, the second setting temperature difference is 0.8°C to 2°C.

Optionally, the second setting temperature difference is 0.9°C to 1.5°C. Optionally, the second setting temperature difference is 1°C. Of course, the second setting temperature difference can also be other values, such as 0.9°C, 1.2°C, 1.5°C, 1.8°C, and 2°C etc.

In the embodiment of the present disclosure, during the compressor is in the slow increasing frequency operation stage by the second frequency increasing rate, another nodal temperature (the fourth predetermined temperature) is added. In a case where the correction temperature of the inner coil is greater than the fourth predetermined temperature, and the temperature increased amount within the setting detection interval (for example, the fifth temperature difference) is within the range of [first setting temperature difference, second setting temperature difference], it indicates that the hysteresis degree of the temperature of the inner coil has been alleviated. At this time, the compressor is controlled to exit the slow increasing frequency operation and to operate at constant frequency to further reduce the hysteresis degree between the temperature of the inner coil and the frequency increase of the compressor.

In other embodiments, after the controlling the compressor to operate at a second frequency increasing rate, the controlling method further includes: obtaining a current second increasing frequency operation duration of the compressor and a current third operating frequency. In a case where the current second increasing frequency operation duration is longer than or equal to a second setting increasing frequency operation duration, controlling the compressor to operate at the current third operating frequency as the constant frequency. In the embodiment, the current second increasing frequency operation duration is obtained by a timer. The second setting increasing frequency operation duration can be determined according to the available practical scenarios. For example, the second setting increasing frequency operation duration is 1 min to 5min, optionally, 1 min, 2min, 3min, or 5min, etc.

In the embodiment of the present disclosure, after the compressor is controlled to operate at a slow increasing frequency, the operation duration is taken as the switching condition, and after a certain operation duration is met, the increasing frequency operation is exited and the constant frequency operation is entered.

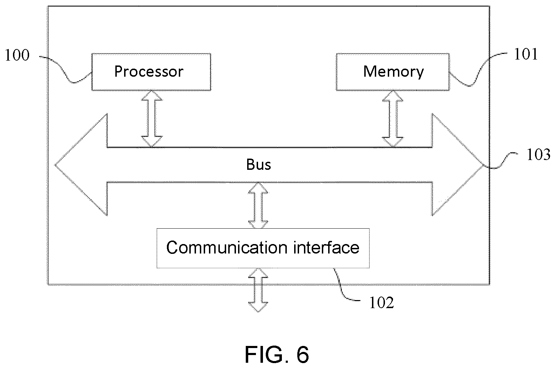

With reference to Fig. 6, the embodiment of the present disclosure provides a controlling device for a compressor of an air conditioner, which includes a processor 100 and a memory 101. Optionally, the device may also include a communication interface 102 and a bus 103. The processor 100, the communication interface 102, and the memory 101 are communicated with each other through the bus 103. The communication interface 102 may be configured for information transmission. The processor 100 may invoke logic instructions in the memory 101 to execute the controlling method for the compressor of the air conditioner in the above-described embodiment.

Further, the logic instructions in the memory 101 described above may be realized in the form of software functional units and may be stored in a computer-readable storage medium when sold or used as a separate product.

As a computer-readable storage medium, the memory 101 may be configured to store software programs, and computer executable programs, such as program instructions/modules corresponding to the methods in embodiments of the present disclosure. The processor 100 executes the function application and data processing by running the program instructions/modules stored in the memory 101 that is to implement the controlling method for the compressor of the air conditioner in the above-described embodiment.

The memory 101 may include a stored program area and a stored data area wherein the stored program area may store an operating system and an application program required for at least one function. The storage data area may store data created according to the use of the terminal device. In addition, the memory 101 may include a high-speed random access memory and may also include a non-volatile memory.

The embodiment of the present disclosure provides an air conditioner including the controlling device for a compressor of an air conditioner.

The embodiments of the present disclosure provide a computer-readable storage medium storing computer-executable instructions configured to execute the above-described controlling method for a compressor of an air conditioner.

The embodiments of the present disclosure provide a computer program product including a computer program stored on a computer-readable storage medium, the computer program including program instructions that, when executed by a computer, cause the computer to execute the above-described controlling method for a compressor of an air conditioner.

The computer-readable storage medium may be a transient computer-readable storage medium or a non-transient computer-readable storage medium.

The technical proposal of the embodiment of the present disclosure can be embodied in the form of a software product, The computer software product is stored in a storage medium and includes one or more instructions for causing a computer device (which may be a personal computer, server, or network device, etc.) to perform all or part of the steps of the method described in the embodiment of the present disclosure. The mentioned storage medium may be a non-transient storage medium, including a U disk, a mobile hard disk, a Read-Only Memory (ROM), a Random Access Memory (RAM), a magnetic disk or an optical disk, and other media capable of storing program codes or maybe a transient storage medium.

The above description and drawings sufficiently illustrate embodiments of the present disclosure to enable to practice by those skilled in the art. Other embodiments may include structural logical electrical procedural and other modifications. Embodiments represent only possible variations. Unless explicitly required, individual parts and functions are optional, and the order of operation can vary. Portions and features of some embodiments may be included in or in place of portions and features of other embodiments. Furthermore, the terms used in the present disclosure are used only to describe embodiments and are not used to limit the claims. As used in the embodiments and the description of the claims, the singular forms of "a", "an" and "the" are intended to include the plural forms as well, unless the context clearly indicates. Similarly, the term "and/or" as used in this application means encompassing one or more associated lists of any and all possible combinations. Additionally, when used in this application, the term "comprise" and its variants "comprises" and/or "comprising", etc. refer to the presence of stated features, totals, steps, operations, elements, and/or components, but do not exclude the presence or addition of one or more other features, totals, steps, operations, elements, components, and/or groupings of these. In the absence of further limitations, an element defined by the phrase "includes an ..." does not preclude the existence of another identical element in the process, method, or device in which the element is included. Herein each embodiment may be highlighted as being different from the other embodiments and the same similar parts between the various embodiments may be referred to with respect to each other. For the method, product, etc. disclosed by the embodiment, if it corresponds to the method portion disclosed by the embodiment, reference can be made to the description of the method portion where relevant.

Those skilled in the art will appreciate that the various example units and algorithm steps described in connection with the embodiments disclosed herein can be implemented in electronic hardware or a combination of computer software and electronic hardware. Whether these functions are performed in hardware or software can depend on the specific application and design constraints of the technical solution. The skilled artisan may use different methods for each particular application to implement the described functionality but such implementation should not be considered outside the scope of the disclosed embodiments. It will be apparent to the skilled person that for convenience and conciseness of description, the specific operating processes of the above-described systems, devices, and units may be referred to the corresponding processes in the mentioned method embodiments and will not be repeated herein.

In the embodiments disclosed herein, the disclosed methods, and products (including but not limited to devices, devices, etc.) may be implemented in other ways. For example, the above-described embodiment of the device is only schematic, for example, the division of the unit may be only a logical function division, and in practice, there may be another division mode, for example, multiple units or components may be combined or integrated into another system, or some features may be ignored or not performed. In addition, the coupling or direct coupling or communication connection between each other shown or discussed may be indirect coupling or communication connection through some interface, device, or unit, and may be electrical, mechanical, or another form. The elements illustrated as separate elements may or may not be physically separated, and the elements displayed as elements may or may not be physical elements, i.e. may be located in one place or may be distributed over a plurality of network elements. Some or all of the units can be selected according to actual needs to realize the embodiment. In addition, each functional unit in the embodiment of the present disclosure may be integrated into one processing unit, each unit may exist physically alone, or two or more units may be integrated into one unit.

The flowcharts and block diagrams in the accompanying drawings illustrate the architecture functionality and operation of possible implementations of systems methods and computer program products according to embodiments of the present disclosure. In this regard, each block in a flow chart or block diagram may represent a module, program segment, or part of code containing one or more executable instructions for performing a specified logical function. In some alternative implementations, the functions indicated in the boxes may also occur in a different order than those indicated in the drawings. For example, two successive boxes can actually be executed substantially in parallel, or they can sometimes be executed in reverse order, depending on the functionality involved. In the description corresponding to the flowcharts and block diagrams in the drawings, the operations or steps corresponding to different blocks may also occur in a different order than that disclosed in the description, and sometimes there is no specific order between the different operations or steps. For example, two successive operations or steps can actually be performed substantially in parallel, or they can sometimes be performed in reverse order, depending on the functionality involved. Each block in the block diagram and/or flow chart, and a combination of the blocks in the block diagram and/or flow chart, may be implemented in a dedicated hardware-based system that performs a specified function or action or may be implemented in a combination of dedicated hardware and computer instructions.

**Claims**

1. A controlling method for a compressor of an air conditioner, comprising:

   obtaining a first actual temperature of an inner coil;
   according to the first actual temperature and a predetermined decreasing amplitude correction value, obtaining a first correction temperature;
   in case where the first correction temperature is greater than a first predetermined temperature, controlling the compressor to operate at a first frequency decreasing rate, the first predetermined temperature is greater than a upper limiting temperature of a constant frequency temperature range of the compressor;
   obtaining a second actual temperature of the inner coil;
   according to the second actual temperature and the predetermined decreasing amplitude correction value, obtaining a second correction temperature;
   obtaining a second temperature difference between the second correction temperature and the previous second correction temperature;
in case where the second temperature difference is lower than or equal to a first setting temperature difference, controlling the compressor to operate at a second frequency decreasing rate; wherein the second frequency decreasing rate is lower than the first frequency decreasing rate.

2. The controlling method according to claim 1,
further comprising:

obtaining an initial operating frequency of the compressor operating at a first frequency decreasing rate, and a first current operating frequency;
obtaining a current frequency decreasing amplitude according to the initial operating frequency and the first current operating frequency;
in case where the current frequency decreasing amplitude is greater than a predetermined frequency decreasing amplitude and the compressor is in the frequency decreasing operation at the first frequency decreasing rate, controlling the compressor to operate at a second frequency decreasing rate.

3. The controlling method according to claim 1,
further comprising:

in case where the first correction temperature is in the constant frequency temperature range, obtaining a first temperature difference between the first correction temperature and the previous first correction temperature;
in case where the first temperature difference is greater than or equal to a second setting temperature difference, controlling the compressor to operate at a first frequency decreasing rate.

4. The controlling method according to claim 3, wherein in case where the first temperature difference is greater than or equal to a second setting temperature difference, controlling the compressor to operate at a first frequency decreasing rate; comprises:

in case where the first correction temperature is greater than or equal to a second predetermined temperature and the first temperature difference is greater than or equal to a second setting temperature difference, controlling the compressor to operate at a first frequency decreasing rate;
wherein the second predetermined temperature is greater than a lower limiting temperature of the constant frequency temperature range and lower than a upper limiting temperature of the constant frequency temperature range.

5. The controlling method according to any one of claims 1 to 4,
further comprising:

in case where the compressor is in a increasing frequency operation state, obtaining a third actual temperature of an inner coil;
according to the third actual temperature and the predetermined decreasing amplitude correction value, obtaining a third correction temperature;
in case where the third correction temperature is lower than a third predetermined temperature, controlling the compressor to operate at a first frequency increasing rate; and
in case where the third correction temperature is greater than or equal to the third predetermined temperature and lower than a lower limiting temperature of the constant frequency temperature range, controlling the compressor to operate at a second frequency increasing rate; wherein the second frequency increasing rate is lower than the first frequency increasing rate.

6. The controlling method according to claim 5,
further comprising:

obtaining a current increasing frequency operation duration of the compressor;
in case where the current increasing frequency operation duration is longer than or equal to a setting increasing frequency operation duration and the third correction temperature is lower than the third predetermined temperature, replacing the third correction temperature with a reference temperature, and executing the control of the compressor according to the reference temperature; the reference temperature is a constant value which is greater than the third predetermined temperature and lower than a lower limiting temperature of the constant frequency temperature range.

7. The controlling method according to claim 5,
   After controlling the compressor to operate at a second frequency increasing rate, further comprising:

   obtaining a fourth actual temperature of the inner coil and a current indoor ambient temperature, and a second current operating frequency of the compressor;
   according to the fourth actual temperature and the predetermined decreasing amplitude correction value, obtaining a fourth correction temperature;
   obtaining a highest operating frequency of the compressor corresponding to the current indoor ambient temperature, and a current first correction coefficient corresponding to the current indoor ambient temperature, and determining a limiting frequency of the compressor corresponding to the current indoor ambient temperature according to a product of the highest operating frequency and the current first correction coefficient; and
   in case where the fourth correction temperature is lower than a lower limiting temperature of the constant frequency temperature range and the second current operating frequency is greater than or equal to the limiting frequency, controlling the compressor to operate at the limiting frequency as constant frequency.

8. The controlling method according to claim 7, wherein the obtaining a highest operating frequency of the compressor corresponding to the current indoor ambient temperature, comprises:

   obtaining a fourth actual temperature of the inner coil after controlling the compressor to operate at a second frequency increasing rate for a setting duration;
   according to the fourth actual temperature and the predetermined decreasing amplitude correction value, obtaining a fourth correction temperature;
   obtaining a fourth temperature difference between the fourth correction temperature and the previous fourth correction temperature, and a detection interval duration;
   according to the fourth temperature difference and the detection interval duration, determining a predictive temperature increasing duration required by the fourth correction temperature increasing to the lower limiting temperature of the constant frequency temperature range; and
   according to the predictive temperature increasing duration and the second frequency increasing rate of the compressor, determining the highest operating frequency of the compressor corresponding to the current indoor ambient temperature.

9. A controlling device for a compressor of an air conditioner, comprising a processor and a memory storing program instructions, wherein
   the processor is configured to execute the controlling method for the compressor of the air conditioner according to any one of claims 1 to 8 when executing the program instructions.

10. An air conditioner, comprising:
    the controlling device for the compressor of the air conditioner according to claim 9.

obtaining a first actual temperature of the inner coil — S110

↓

according to the first actual temperature and a predetermined decreasing amplitude correction value, obtaining a first correction temperature — S120

↓

in a case where the first correction temperature is greater than a first predetermined temperature, controlling the compressor to operate at a first frequency decreasing rate — S130

↓

obtaining a second actual temperature of the inner coil — S140

↓

according to the second actual temperature and the predetermined decreasing amplitude correction value, obtaining a second correction temperature — S150

↓

obtaining a second temperature difference between the second correction temperature and the previous second correction temperature — S160

↓

in a case where the second temperature difference is lower than or equal to a first setting temperature difference, controlling the compressor to operate at a second frequency decreasing rate; wherein the second frequency decreasing rate is lower than the first frequency decreasing rate — S170

FIG. 1

in a case where the compressor is in a increasing frequency operation state, obtaining a third actual temperature of an inner coil — S210

according to the third actual temperature and the predetermined decreasing amplitude correction value, obtaining a third correction temperature — S220

in a case where the third correction temperature is lower than a third predetermined temperature, controlling the compressor to operate at a first frequency increasing rate — S230

in a case where the third correction temperature is greater than or equal to the third predetermined temperature and lower than a lower limiting temperature of the constant frequency temperature range, controlling the compressor to operate at a second frequency increasing rate; wherein the second frequency increasing rate is lower than the first frequency increasing rate — S240

## FIG. 2

obtaining a fourth actual temperature of the inner coil and a current indoor ambient temperature, and a second current operating frequency of the compressor — S310

according to the fourth actual temperature and the predetermined decreasing amplitude correction value, obtaining a fourth correction temperature — S320

obtaining a highest operating frequency of the compressor corresponding to the current indoor ambient temperature, and a current first correction coefficient corresponding to the current indoor ambient temperature, and determining a limiting frequency of the compressor corresponding to the current indoor ambient temperature according to a product of the highest operating frequency and the current first correction coefficient — S330

in a case where the fourth correction temperature is lower than a lower limiting temperature of the constant frequency temperature range and the second current operating frequency is greater than or equal to the limiting frequency, controlling the compressor to operate at the limiting frequency as the constant frequency — S340

## FIG. 3

obtaining a current fourth temperature difference between the current fourth correction temperature and the previous fourth correction temperature and a detection interval duration of the actual temperature of the inner coil after controlling the compressor to operate at a second frequency increasing rate for a setting duration ⟋ S410

according to the current fourth temperature difference and the detection interval duration, determining a predictive temperature increasing duration required by the fourth correction temperature increasing to the lower limiting temperature of the constant frequency temperature range ⟋ S420

# FIG. 4

obtaining a fifth actual temperature of the inner coil and a third operating frequency of the compressor ⟋ S510

according to the fifth actual temperature and the predetermined decreasing amplitude correction value, obtaining a fifth correction temperature ⟋ S520

obtained a fifth temperature difference between the fifth correction temperature and the previous fifth correction temperature ⟋ S530

in a case where the fifth correction temperature is greater than or equal to a fourth predetermined temperature, and the fifth temperature difference is greater than or equal to the first setting temperature difference and lower than or equal to the second setting temperature difference, controlling the compressor to operate at the third operating frequency as the constant frequency ⟋ S540

# FIG. 5

100 — Processor     Memory — 101

103

Bus

Communication interface

102

FIG. 6

## INTERNATIONAL SEARCH REPORT

International application No.

**PCT/CN2022/078348**

**A.    CLASSIFICATION OF SUBJECT MATTER**

F24F 11/86(2018.01)i;  F24F 11/64(2018.01)i;  F24F 11/61(2018.01)i;  F24F 140/20(2018.01)i;  F24F 110/10(2018.01)i

According to International Patent Classification (IPC) or to both national classification and IPC

**B.    FIELDS SEARCHED**

Minimum documentation searched (classification system followed by classification symbols)

F24F, F25B

Documentation searched other than minimum documentation to the extent that such documents are included in the fields searched

Electronic data base consulted during the international search (name of data base and, where practicable, search terms used)

CNABS, CNKI, DWPI, SIPOABS, EPODOC: 空调, 控制, 压缩机, 频率, 温度, 盘管, 修正, air w conditioner, control, compressor, frequency, temperature, coil, trim

**C.    DOCUMENTS CONSIDERED TO BE RELEVANT**

| Category* | Citation of document, with indication, where appropriate, of the relevant passages | Relevant to claim No. |
|---|---|---|
| PX | CN 113251638 A (QINGDAO HAIER AIR CONDITIONER CO., LTD. et al.) 13 August 2021 (2021-08-13)<br>claims 1-10 | 1-10 |
| A | CN 111706967 A (QINGDAO HAIER AIR CONDITIONER CO., LTD. et al.) 25 September 2020 (2020-09-25)<br>description, paragraphs [0023]-[0082], and figures 1-4 | 1-10 |
| A | CN 107525234 A (QINGDAO HAIER AIR CONDITIONER GENERAL CO., LTD.) 29 December 2017 (2017-12-29)<br>entire document | 1-10 |
| A | CN 107178873 A (QINGDAO HAIER AIR CONDITIONER GENERAL CO., LTD.) 19 September 2017 (2017-09-19)<br>entire document | 1-10 |
| A | CN 111964234 A (QINGDAO HAIER AIR CONDITIONER CO., LTD. et al.) 20 November 2020 (2020-11-20)<br>entire document | 1-10 |

☑ Further documents are listed in the continuation of Box C.       ☑ See patent family annex.

| | |
|---|---|
| *    Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| **16 May 2022** | **18 August 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/078348** |

### C. DOCUMENTS CONSIDERED TO BE RELEVANT

| Category* | Citation of document, with indication, where appropriate, of the relevant passages | Relevant to claim No. |
| --- | --- | --- |
| A | CN 106152382 A (QINGDAO HAIER AIR CONDITIONER GENERAL CO., LTD.) 23 November 2016 (2016-11-23)<br>    entire document | 1-10 |
| A | JP 2005055053 A (MATSUSHITA ELECTRIC IND. CO., LTD.) 03 March 2005 (2005-03-03)<br>    entire document | 1-10 |
| A | JP 2015021656 A (PANASONIC CORP.) 02 February 2015 (2015-02-02)<br>    entire document | 1-10 |

Form PCT/ISA/210 (second sheet) (January 2015)

**INTERNATIONAL SEARCH REPORT**
Information on patent family members

International application No.

**PCT/CN2022/078348**

| Patent document cited in search report | | | Publication date (day/month/year) | Patent family member(s) | Publication date (day/month/year) |
|---|---|---|---|---|---|
| CN | 113251638 | A | 13 August 2021 | None | |
| CN | 111706967 | A | 25 September 2020 | None | |
| CN | 107525234 | A | 29 December 2017 | None | |
| CN | 107178873 | A | 19 September 2017 | None | |
| CN | 111964234 | A | 20 November 2020 | None | |
| CN | 106152382 | A | 23 November 2016 | None | |
| JP | 2005055053 | A | 03 March 2005 | None | |
| JP | 2015021656 | A | 02 February 2015 | None | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110436940